# EUROPEAN PATENT SPECIFICATION

(11) **EP 2 063 652 B1**
(45) Date of publication and mention of the grant of the patent: **15.08.2012**
(21) Application number: 08706542.1
(22) Date of filing: 10.01.2008
(51) Int. Cl.: H04W 4/00

(54) **A METHOD, SYSTEM AND POC SERVER FOR GRANTING TALK BURST TO TERMINALS**
VERFAHREN, SYSTEM UND POC-SERVER ZUR BEREITSTELLUNG VON SPRECH-BURST FÜR ENDGERÄTE
PROCÉDÉ, SYSTÈME ET SERVEUR POC UTILISÉS POUR AUTORISER L'ENVOI DE SALVES DE SIGNAUX DE VOIX À DES TERMINAUX

(30) Priority: 31.01.2007 CN 200710003126
(43) Date of publication of application: 27.05.2009
(73) Proprietor: Huawei Technologies Co., Ltd., Shenzhen, Guangdong Province 518129 (CN)
(72) Inventor: ZHANG, Wangguang, Guangdong 518129 (CN)
(74) Representative: Körber, Martin Hans
(86) International application number: PCT/CN2008/070081
(87) International publication number: WO 2008/095423

(56) References cited:
- WO-A-2006/129985
- CN-A- 1 678 095
- CN-A- 1 691 799
- CN-A- 1 825 989
- CN-A- 101 005 651
- US-A1- 2007 019 595
- OPEN MOBILE ALLIANCE (OMA): "PoC User Plane - Candidate Version 1.0" OMA-TS_POC-USERPLANE-V1_0-20060127-C,, [Online] 27 January 2006 (2006-01-27), pages 1-167, XP002557420 Retrieved from the Internet: URL:http://www.openmobilealliance.org/Tech nical/release_program/docs/PoC/ V1_0-20060127-C/OMA-TS-PoC-UserPlane-V1_0- 20060127-C.pdf> [retrieved on 2009-11-24]

## Description

### FIELD OF THE TECHNOLOGY

The disclosure relates to network communication technology, and more particularly to a method and a system for granting a client talk burst (TB), and a push to talk over cellular (PoC) server.

### BACKGROUND

PoC service is a mobile data service with an intercom function developed on a public mobile network. The PoC service is a bi-directional, instant, and multi-party communication manner, which allows one client to communicate with one or more clients. The PoC service originates from a cluster communication service (push to talk service). The push to talk service is capable of realizing "one to one" and "one to many" conversation by pressing a key without dialing or pending, and is similar to an intercom experience. The "one to many" conversation includes a temporary group session, an instant group session, and a chat group session.

The PoC service is a half-duplex communication service, which merely allows one client to have a client talk burst (TB) at one moment, and the other clients to be in a talk receiving state according to a TB control. If the other clients want to talk, they must first acquire the TB, so that the TB taken by the former client may be grabbed. The so-called TB control refers to achieving a Talk Burst Control Protocol (TBCP) function over a Real Time Transmission Control Protocol (RTCP), that is, a client sends a TB request message during a session to a PoC server, then the PoC server determines whether to grant the TB to the client or not, according to the current PoC server state for general Talk Burst and the priority of the client sending the TB request message.

The PoC server is a core member in the PoC service. The PoC server state for general Talk Burst during the process of granting the TB is introduced as follows.

In State 1: the PoC server state for general Talk Burst is in a Talk Burst Taken (TB_Taken) state.

The PoC server in the TB_Taken state is continuously in the state of receiving and sending media packets.

In State 2: the PoC server enters a Talk Burst Revoke (TB_Revoke) pending state.

In the TB_Revoke pending state, the PoC server receives a Talk Burst Request (TB_Request) message with pre_emptive message sent from a TB requesting client B . Firstly, the Talk Burst priority level carried by the TB requesting client B is determined, and if the Talk Burst priority level of the client B is higher than that of a client A in the TB_Taken state, or the Talk Burst priority level is at a pre_emptive level, the PoC server sends a TB_Revoke message to the client A, in which the level of 3 is set as the pre_emptive level.

In State 3: the PoC server enters a Talk Burst Idle (TB_Idle) state.

Once entering the TB_Revoke pending state, the PoC server immediately starts a timer (Stop talking grace timer) thereof. When the timer is timeout, or the PoC server receives a message that the client A in the TB_Taken state has sent the last media packet, the PoC server enters the TB_Idle state from the TB_Revoke pending state.

In State 4: the PoC server enters the TB_Taken state.

After the PoC server enters the TB_Idle state, if receiving a Talk Burst Request (TB_Request) message from a TB requesting client B in the state, the PoC server sends a Talk Burst Granted (TB_Granted) message to the client B, sends the TB_Taken message to the client A, and enters the TB_Taken state from the TB_Idle state.

It may be known from the PoC state conversion process that, after the client A in the TB_Taken state releases the TB, the PoC server in the TB_Revoke pending state can only be converted to the TB_Idle state, but cannot be directly converted to the TB_Taken state. Therefore, the TB requesting client B may acquire the TB only by initiating the TB_Request message through pressing the key twice. In addition, if a client C initiates the TB_Request message at the instant when the client A in the TB_Taken state releases the TB, the PoC server grants the TB to the client C, and as a result, the client B, which initiates the TB_Request message at the earliest circumstance, does not acquire the TB.

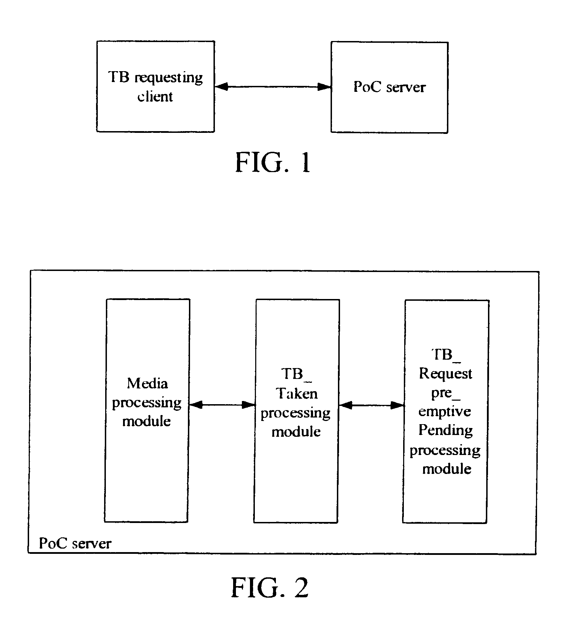

As known from the above, in the traditional art, when the PoC service is developed, the client with the pre_emptive priority may not grab the TB taken by the permitted client through pressing the key once. As a result, the client shall wait for a longer time, and the users' experience is deteriorated. D1=OMA- TS_ POC-USERPLANE-V1_0 discloses "a PoC server state transition diagram for general Talk Burst operation" (figure 11, pages 69-77). In the standardD1, when the PoC server in the TB_Taken state receives a TB request message from a permitted PoC client (previously granted client), the PoC server remains in the TB_Taken state. When the PoC server in the TB_Taken state receives a TB request message with pre-emptive priority, and if determined that the TB request priority of the received message is set to pre-emptive priority and the TB request priority of the permitted client is not set to pre-emptive priority, the PoC server shall perform the action of entering the pending TB_Revoke State. D2=US20070019595A1 discloses a terminal, method and system for controlling a floor during a PT session. In particular, "upon receiving the talk burst request message from the client 10 with the highest pre-emptive priority, the PT server sends a stop talk burst message to the PT client 14 which is currently sending the media data that the floor thereof would be cancelled. Before interrupting the floor of the client 14, the PT server permits the client 14 to take a grace time. The client 14 sends the last media data to the PT client 10 during the grace time, and thereafter sends a tall burst complete message to the PT server thereby release its floor. The PT server having received the talk burst complete message then sends a talk burst confirm message to the PT client 10 to inform the PT client 10 of the grant of the floor to the PT client 10. D3=WO2006129985A1 into consideration, D3 discloses a method and system similar to the solution in figure 2 paragraph 16-21 of D2.

### SUMMARY

According to an embodiment of the disclosure, a method for granting a client TB is provided, which includes the following steps: a PoC server receives a TB request message sent by a TB requesting client; the PoC server revokes a TB taken by a permitted client (client in a TB_Taken state) when the TB requesting client is a client with the pre_emptive priority, and granting the TB to the client with the pre_emptive priority. The present invention relates through the following to a method and an apparatus for granting a client TB as defined by the respective independent claims. Favorable embodiments are described by the dependent claims.

According to an embodiment of the disclosure, a system for granting a client TB is provided, which includes a TB requesting client and a PoC server. The TB requesting client is adapted to initiate a TB request message to PoC server. The PoC server is adapted to revoke a TB taken by a user terminal in a TB_Taken state when the TB requesting client is a client with the pre_emptive priority, and grant the TB to the client with the pre_emptive priority.

According to an embodiment of the disclosure, a PoC server for granting a client TB is provided, which includes a media processing module, a TB_Taken processing module and a TB_Request pre_emptive pending processing module. The media processing module, adapted to receive a TB request message from a TB requesting client , and send the TB request message. The TB_Taken processing module, adapted to receive the TB request message from the media processing module, determine whether the TB requesting client is a client with the pre_emptive priority or not, and if it is a client with the pre_emptive priority, revoke a TB taken by a permitted client. The TB_Request pre_emptive pending processing module, adapted to grant the TB to the client with the pre_emptive priority after the TB_Taken processing module revokes the TB taken by the permitted client.

According to an embodiment of the disclosure, a method and a system for granting a client TB and a PoC server are provided. The PoC server in the TB_Taken state receives the TB request message from the TB requesting client. When it is determined that the Talk Burst priority level carried by the TB request message is the pre_emptive level, the PoC server revokes the TB taken by the permitted client, and grants the TB to the client in the TB requesting state.

As known from the above, the client with the pre_emptive priority may grab the TB taken by the client with a lower Talk Burst priority level merely through pressing the key once. Therefore, the disclosure provides a simple and reliable TB_Request pre_emptive function, which enhances the users' experience.

### BRIEF DESCRIPTION OF THE DRAWINGS

Figure 1 is a schematic structural view of a system for granting a terminal TB in a PoC service according to an embodiment of the disclosure;

Figure 2 is a schematic structural view of a PoC server according to an embodiment of the disclosure;

Figure 3 is another schematic structural view of a PoC server according to an embodiment of the disclosure;

Figure 4 is a flow chart of a method for granting a TB in a PoC service according to an embodiment of the disclosure;

Figure 5 is a flow chart of a state conversion of a PoC server when granting client TB according to an embodiment of the disclosure; and

Figure 6 is another flow chart of a method for granting a client TB in a PoC service according to an embodiment of the disclosure.

### DETAILED DESCRIPTION

Figure 1 is a schematic structural view of a system for granting a client TB in a PoC service according to an embodiment of the disclosure. As shown in Figure 1, the system includes a client and a PoC server.

The client in a TB requesting state is adapted to send a TB_Request message to the PoC server in a TB_Taken state, receive a TB_Granted message sent from the PoC server, and acquire the TB.

The PoC server is adapted to receive the TB_Request message from the client in the TB requesting state. When it is determined that the Talk Burst priority level in the TB_Request message is pre_emptive, the PoC server is further adapted to determine a Talk Burst priority level of a permitted client. When the Talk Burst priority level of the permitted client is not the pre_emptive level, the PoC server is adapted to send a TB_Revoke message and a TB_Taken message to the permitted client, and inform the permitted client to release the TB. The PoC server is also adapted to send a TB_Granted message to the client in the TB requesting state.

It should be noted that, the client in the TB requesting state refers to the client that applies to the PoC server for the TB. The permitted client refers to the client currently occupying the TB.

Figure 2 is a schematic structural view of a PoC server according to an embodiment of the disclosure. As shown in Figure 2, the PoC server includes a media processing module, a TB_Taken processing module, and a TB_Request pre_emptive pending processing module.

The media processing module is adapted to receive a TB_Request message from a client in the TB requesting state, and send the TB_request message to the TB_Taken processing module.

The TB_Taken processing module is adapted to receive the TB_Request message, determine whether the client in the TB requesting state is a client with the pre_emptive priority or not, and if yes, revoke the TB taken by the permitted client.

The TB_Request pre_emptive pending processing module is adapted to grant the TB to the client with the pre_emptive priority, when the TB_Taken processing module revokes the TB taken by the permitted client.

In the embodiment shown in Figure 2, the structural view of the PoC server for granting the client TB has been introduced. The internal structure of the other PoC servers is further described below.

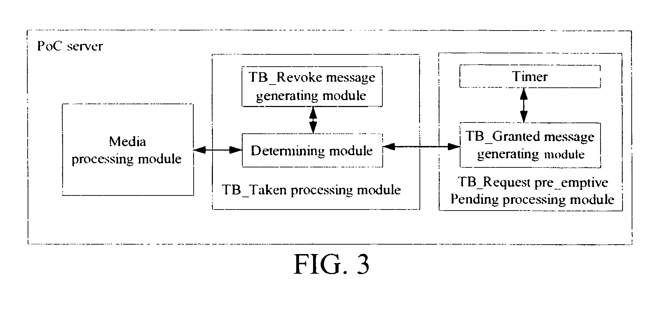

Figure 3 is another schematic structural view of a PoC server according to an embodiment of the disclosure. As shown in Figure 3, Compared with the embodiment shown in Figure 2, the TB_Taken processing module in the PoC server includes a determining module and a TB_Revoke message generating module. The TB_Request pre_emptive pending processing module includes a TB_Granted message generating module and a timer (for example, T3 timer) .

In this embodiment, a client in a TB requesting state, sends a RTP/RTCP packet carrying the TB_Request message to the media processing module, receives the TB_Granted message sent from the media processing module, and acquires the TB.

The determining module is adapted to receive the TB_Request message sent from the media processing module, determine a Talk Burst priority level of the client in the TB requesting state and that of a permitted client, and send the determination result to the TB_Revoke message generating module.

The TB_Revoke message generating module is adapted to receive the determination result. When the Talk Burst priority level of the client in the TB requesting state is the pre_emptive level, and the Talk Burst priority level of the permitted client is not the pre_emptive level, the TB_Revoke message generating module generates a TB_Revoke message, and sends the TB_Revoke message to the permitted client.

The TB_Granted message generating module is adapted to receive a timeout message sent from the timer and/or a Talk Burst Release (TB_Release) message sent from the permitted client. Upon receiving at least one of the timeout message and the TB_Release message, the TB_Granted message generating module generates the TB_Granted message, and sends the TB_Granted message to the client in the TB requesting state. When receiving the TB_Release message and meanwhile acquiring a message from the received TB_Release message that the permitted client has already sent out the last media packet, the TB_Granted message generating module generates the TB_Granted message.

The timer (T3 timer) is adapted to perform timing and send the timeout message to the TB_Granted message generating module.

It should be noted that, the embodiment of the disclosure provides a schematic structural view; the media processing module, the TB_Taken processing module, and the TB_Request pre_emptive pending processing module are further divided in the PoC server. However, the embodiment is merely a preferred embodiment of the technical solution of the disclosure, but not to limit the protection scope of the disclosure. Other combining manners, for example, the PoC server including the media processing module, the TB_Taken processing module, the TB_Granted message generating module, and the timer (T3 timer); or the PoC server including the media processing module, the determining module, the TB_Revoke message generating module, and the TB_Request pre_emptive pending processing module also fall within the protection scope of the disclosure.

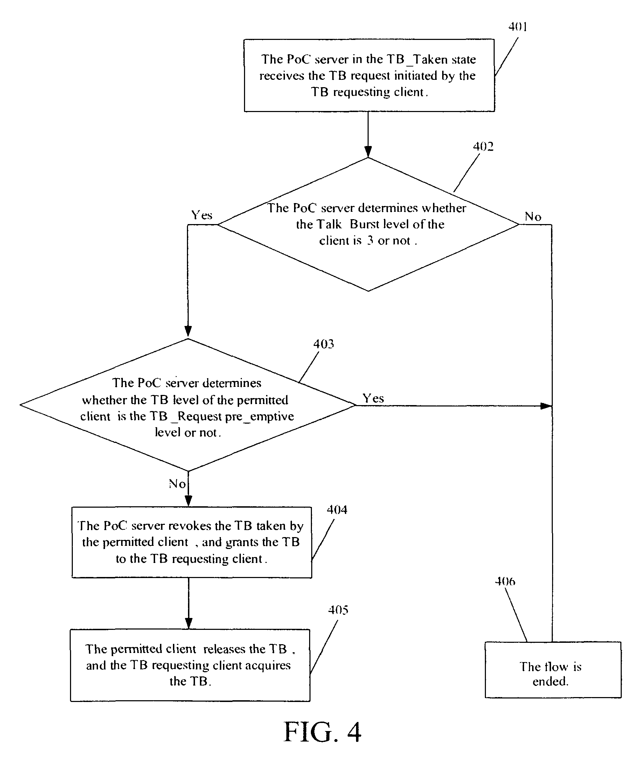

In the embodiment shown in FIGs. 1, 2, and 3, the system for granting a client TB in the PoC service and the PoC server have been introduced. In another embodiment shown in Figure 4, a method for a client with the Talk Burst priority level of pre_emptive level grabbing the TB taken by the permitted client is introduced.

Figure 4 is a flow chart of a method for granting a client TB in a PoC service according to an embodiment of the disclosure. As shown in Figure 4, the method includes the following steps.

In Step 401, a PoC server in a TB_Taken state receives a TB request message sent by a client in the TB requesting state.

In the step, the client in the TB requesting state initiates the TB_Request message to the PoC server in the TB_Taken state; the TB_Request message carries the Talk Burst priority level of the client in the TB requesting.

In Step 402, the PoC server determines the Talk Burst priority level of the client; if the Talk Burst priority level is the pre_emptive level, Step 403 is executed; otherwise, Step 406 is executed.

In this step, for example, the PoC server determines whether the Talk Burst priority level of the client in the TB requesting state is 3 (3 stands for the pre_emptive level) or not; if the level of the client is 3, it is determined that the Talk Burst priority level of the client in the TB requesting state is the pre_emptive level.

In Step 403, the PoC server determines the Talk Burst priority level of the permitted client; if the Talk Burst priority level is not the pre_emptive level, Step 404 is executed; otherwise, Step 406 is executed.

In this step, for example, the PoC server determines whether the Talk Burst priority level of the permitted client is 3 (3 stands for the pre_emptive level) or not, and if the level of the client is not 3, it is determined that the Talk Burst priority level of the permitted client is not the pre_emptive level.

In Step 404, the PoC server revokes the TB taken by the permitted client, and grants the TB to the client in the TB requesting state.

In this step, after receiving the TB_Request message, the PoC server sends the TB_Revoke message to the permitted client, and enters a TB_Request pre_emptive pending state. The PoC server in the TB_Request pre_emptive pending state sends the TB_Taken message to the permitted client, informs the user to release the TB, sends the TB_Granted message to the client in the TB requesting state, and grants the TB to the client in the TB requesting state.

In Step 405, the permitted client releases the TB, and the client in the TB requesting state acquires the TB.

In Step 406, the flow is ended.

In the embodiment shown in Figure 4, the flow of the method for the client carrying the pre_emptive priority grabbing the TB taken by the permitted client in the PoC service has been introduced. Step 402 and Step 403 can be reversed, that is, the PoC server may firstly determine the Talk Burst priority level of the TB requesting client, or may also firstly determine the Talk Burst priority level 1 of the permitted client.

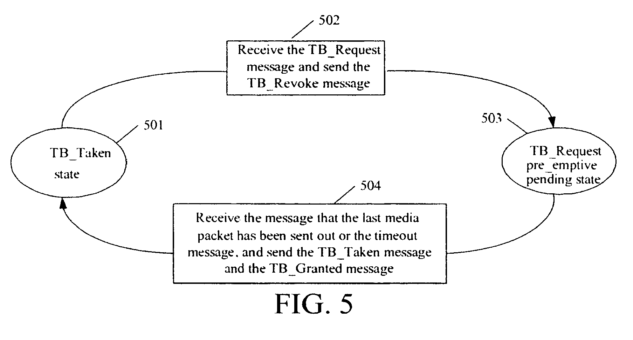

In another embodiment shown in Figure 5, the TB state conversion process for the PoC server when grabbing the TB through adopting the embodiment of the disclosure is introduced.

Figure 5 is a schematic view of the flow of the state conversion process of the PoC server during the client TB granting process of the embodiment of the disclosure.

Referring to Figure 5, in State 501, a PoC server is in a TB_Taken state.

In this state, if the PoC server is continuously in a state of receiving and sending media packets, the PoC server is in the TB_Taken state.

In State 502, the PoC server is converted from the TB_Taken state to a TB_Revoke pre_emptive state.

In this state, the PoC server receives a TB_Request message from a client in the TB requesting state. When it is determined that the Talk Burst priority level carried in the TB_Request message is the pre_emptive priority, and the Talk Burst priority level of a permitted client is not the pre_emptive level, the PoC server sends a TB_Revoke message to the permitted client. The PoC server is converted to the TB_Revoke pre_emptive state.

In State 503, the PoC server enters the TB_Revoke pre_emptive state.

In this state, once the PoC server enters the TB_Revoke pre_emptive state, the PoC server immediately starts a timer (such as T3 timer). The PoC server in the TB_Revoke pre_emptive state receives a TB_Release message sent from the permitted client. If the TB_Release message does not carry a message about the last media packet sequence number, or the timer (such as T3 timer) does not time out, the PoC server is always in the TB_Revoke pre_emptive state.

In State 504, the PoC server is converted from the TB_Revoke pre_emptive state to the TB_Taken state.

In this state, the PoC server acquires the message about the last media packet sequence number from the TB_Release message, which indicates that the permitted client has sent the last media packet, or the timer (such as T3 timer) started in State 503 is timeout. After sending the TB_Taken message to the permitted client, and sending the TB_Granted message to the client in the TB requesting state, the PoC server is converted to the TB_Taken state.

As compared with the traditional art, in the embodiment shown in Figure 5, once the PoC server receives the TB_Request message carrying the TB_Request pre_emptive priority sent from the client in the TB requesting state, the PoC server automatically enters the TB_Revoke pre_emptive state, and revokes the TB taken by the permitted client within a specified time period. After the permitted client releases the TB, the PoC server immediately grants the TB to the client in the TB requesting state, and meanwhile, enters the TB_Taken state. Therefore, the client in the TB requesting state is allowed to grab the TB merely through pressing the key once.

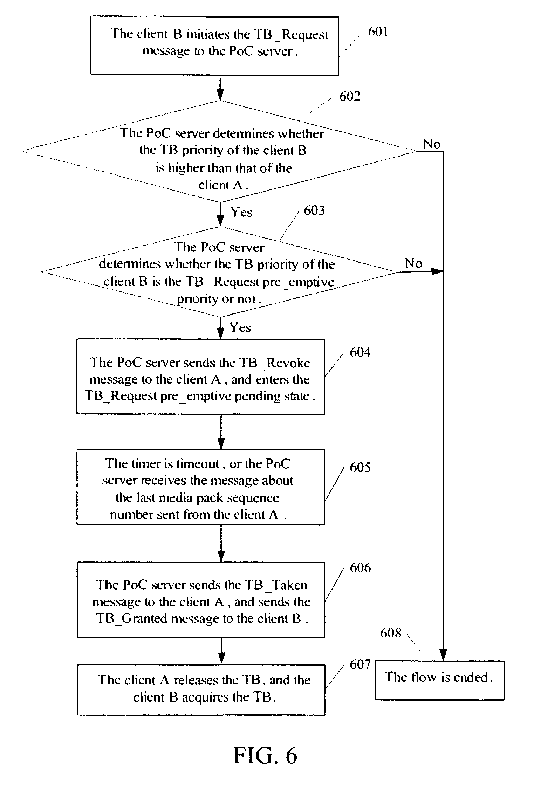

Figure 6 is another flow chart of a method for granting a client TB in a PoC service according to an embodiment of the disclosure. As shown in Figure 6, the method includes the following steps.

In Step 601, a client B initiates a TB_Request message to the PoC server.

In this step, a client A occupies a TB, the PoC server is in the TB_Taken state, and the client B initiates the TB_Request message to the PoC server.

In Step 602, the PoC server determines the TB priority levels of the client B and the client A; if the TB priority level of the client B is higher than that of the client A, Step 603 is executed; otherwise, Step 608 is executed.

In this step, the manner of comparing the TB priority level of the client B with that of the client A is the similar to that in the traditional art, which will not be elaborated herein.

In Step 603, the PoC server determines whether the TB priority level of the client B is the TB_Request pre_emptive priority or not, and if yes, Step 604 is executed; otherwise, Step 608 is executed.

In this step, the PoC server determines whether the TB priority of the client B is 3 (3 stands for the pre_emptive level) or not, and if yes, it is determined that the TB priority of the client B is the TB_Request pre_emptive priority, and Step 604 is executed; otherwise, it is determined that the TB priority of the client B is not the TB_Request pre_emptive priority, and Step 608 is executed.

In Step 604, the PoC server sends a TB_Revoke message to the client A.

In Step 605, the T3 timer times out, or the PoC server receives the message about the last media packet sequence number sent from the client A.

In this step, once the PoC server enters the TB_Revoke pre_emptive state from the TB_Taken state, the PoC server starts the T3 timer. If the T3 timer times out, or the PoC server receives the message about the last media packet sequence number carried in the TB_Release message sent from the client A, which indicates the client A has sent the last media packet.

In Step 606, the PoC server sends the TB_Taken message to the client A, and sends the TB_Granted message to the client B.

In this step, the PoC server sends the TB_Taken message to the client A, and informs the client A to completely release the TB. The PoC server sends the TB_Granted message to the client B, and informs the client B that the TB can be taken by client B.

In Step 607, the client A releases the TB, and the client B acquires the TB.

In this step, the process for the client A to release the TB includes: once the client A receives the TB_Revoke message, the TB is automatically released, or the PoC server forcefully grabs the TB of the client A. The process for the PoC server to forcefully grab the TB taken by the client A includes: after sending the TB_Taken message to the client A, the PoC server immediately starts the T3 timer, and monitors the time spent on releasing the TB by the client A. If the client A still does not release the TB when the T3 timer times out, the PoC server forcefully grabs the TB taken by the client A.

In Step 608, the flow is ended.

Till now, the operations for the client B to grab the TB taken by the client A have been finished.

It should be noted that, in this embodiment, it may firstly determine whether the client B is the client with the pre_emptive priority or not; and if yes, the TB priority of the client B is compared with that of the client A. If the TB priority of the client B is higher than that of the client A, Step 604 is executed. In addition, in this embodiment, the client B is the client in the TB requesting state, and the client A is the permitted client.

Through comparing the embodiments shown in FIGs. 4 and 6, it is found that the technical solution of the embodiment shown in Figure 4 is that, the PoC server firstly determines whether the Talk Burst priority level of the TB requesting client is the pre_emptive level or not, and if yes, it further determines whether the Talk Burst priority level of the permitted client is the pre_emptive level or not. If the Talk Burst priority level of the permitted client is not the pre_emptive level, Step 404 and Step 405 are executed. The detailed technical solution of the embodiment shown in Figure 6 is that, the PoC server determines whether the Talk Burst priority level of the TB requesting client is higher than that of the permitted client or not; and if yes, it further determines whether the Talk Burst priority level of the TB requesting client is the pre_emptive priority or not; and if yes, the subsequent Step 604 to Step 607 are executed.

In this embodiment, after receiving the TB_Release message sent from the client A, the PoC server in the TB_Revoke pre_emptive state periodically enters the TB_Revoke pre_emptive state. In the embodiment shown in Figure 1, after sending the TB_Revoke message to the client A, the PoC server in the TB_Taken state enters the TB_Revoke pending state. In the embodiment of the disclosure, after sending the TB_Granted message to the client B, the PoC server in the TB_Taken state enters the TB_Revoke pending state.

When the method and system for granting a terminal TB in the PoC service according to the embodiment of the disclosure are introduced, the TB_Taken state, TB_Revoke pending state, and TB_Revoke pre_emptive state of the TB state machine in the PoC server are introduced. Other states of the TB state machine in the PoC server and the state conversion among each state according to the embodiments of the disclosure are completely the same as that of the traditional art, such as the conversion from the TB_Idle state to a Releasing state, which will not be elaborated herein. In the embodiments of the disclosure, only the TB_Revoke pre_emptive state and the corresponding process are added into the TB state machine of the PoC server, without changing other solutions, so that the TB migration state flow specified in the Open Mobile Alliance (OMA) regulation is not affected at all, and thus the users' experience in the other aspects may not be affected.

To sum up, the above descriptions are merely taken as preferred embodiments of the disclosure, but not to limit the protection scope of the disclosure.

Finally, it should be understood that the above embodiments are only used to explain, but not to limit the technical solution of the present invention. In despite of the detailed description of the present invention with referring to above preferred embodiments, it should be understood that various modifications, changes or equivalent replacements can be made by those skilled in the art without departing from the scope of the present invention and covered in the claims of the present invention.

## Claims

1. A method for granting a client talk burst ,TB, **characterized by** comprising:
receiving, (401-403,501-502, 601-603) by a push to talk over cellular, PoC, server, wherein the PoC server is in a TB_Taken state, a TB request message sent by a TB requesting client; and
revoking, (404-405, 503-504,604-605)by the PoC server, a TB taken by a permitted client and granting (606) the TB to the client with the pre_emptive priority, when determined that the TB requesting client is a client with the pre_emptive priority and a Talk Burst priority level of the TB requesting client is higher than that of the permitted client;
wherein the revoking, by the PoC server, the TB taken by the permitted client comprises:
starting a timer, and revoking, (503, 604-605) by the PoC server, the TB taken by the permitted client when the timer times out.

2. The method according to claim 1, wherein the determined that the TB requesting client being a client with the pre_emptive priority comprises:
determining that the TB requesting client is a client with the pre_emptive priority, when a pre_emptive Talk Burst priority level is carried in the TB request message.

3. The method according to claim 1, wherein the revoking, by the PoC server, the TB taken by the permitted client comprises:
sending, by the PoC server, a Talk Burst Revoke(TB_Revoke) message to the permitted client, and entering a Talk Burst Request(TB_Request) pre_emptive pending state;
sending, by the PoC server in the TB_Request pre_emptive pending state, a TB_Taken message to the permitted client; and
receiving, by the permitted client, the TB_Taken message and releasing the TB.

4. The method according to claim 3, wherein the granting the TB to the client with the pre_emptive priority comprises:
sending a Talk Burst Granted(TB_Granted) message to the client with the pre_emptive priority; and
receiving, by the client with the pre_emptive priority, the TB_Granted message and acquiring the TB.

5. The method according to claim 4, wherein after granting the TB to the client with the pre_emptive priority, the method further comprises:
entering, by the PoC sever, the TB_Taken state from the TB_Request pre_emptive pending state so as to provide a service for the client with the pre_emptive priority.

6. A push to talk over cellular, PoC, server, comprising:
a media processing module, adapted to receive a TB request message sent by a TB requesting client and send the TB request message to a TB_Taken processing module;
the TB_Taken processing module, adapted to receive the TB request message from the media processing module; when determined that the TB requesting client is a client with the pre_emptive priority and a Talk Burst priority level of the TB requesting client is higher than that of the permitted client, revoke the TB taken by the permitted client;
a TB_Request pre_emptive pending processing module, adapted to grant the TB to the client with the pre_emptive priority after the TB_Taken processing module revokes the TB taken by the permitted client;
a timer, adapted to perform timing and send a timeout message to a TB_Granted message generating module; and
the TB_Granted message generating module, adapted to grant the TB to the client with the pre_emptive priority when receiving the timeout message.

## Patentansprüche

1. Verfahren zum Gewähren eines Client-Gesprächsbursts, Client-TB, **dadurch gekennzeichnet, dass** es Folgendes umfasst:
Empfangen (401-403, 501-502, 601-603) durch einen zellulären Push-to-talk-over-cellular-Server, PoC-Server, wobei der PoC-Server in einem TB_angenommen-Zustand ist, einer TB-Anforderungsnachricht, die durch einen einen TB anfordernden Client gesendet wird; und
Widerrufen (404-405, 503-504, 604-605) durch den PoC-Server eines TB, der durch einen zugelassenen Client angenommen wird, und Gewähren (606) des TB für den Client mit der unterbrechenden Priorität, wenn bestimmt wird, dass der einen TB anfordernde Client ein Client mit der unterbrechenden Priorität ist und ein Gesprächsburst-Prioritätsniveau des einen TB anfordernden Clients höher ist als jenes des zugelassenen Clients;
wobei das Widerrufen durch den PoC-Server des durch den zugelassenen Client angenommenen TB Folgendes umfasst:
Starten eines Zeitgebers und Widerrufen (503, 604-605) durch den PoC-Server des durch den zugelassenen Client angenommenen TB, wenn der Zeitgeber abgelaufen ist.

2. Verfahren nach Anspruch 1, wobei die Bestimmung, dass der einen TB anfordernde Client ein Client mit unterbrechender Priorität ist, Folgendes umfasst:
Bestimmen, dass der einen TB anfordernde Client ein Client mit einer unterbrechenden Priorität ist, wenn ein Pegel einer unterbrechenden Gesprächsburst-Priorität in der TB-Anforderungsnachricht geführt wird.

3. Verfahren nach Anspruch 1, wobei das Widerrufen durch den PoC-Server des durch den zugelassenen Client angenommenen TB Folgendes umfasst:
Senden durch den PoC-Server einer Gesprächsburst-Widerrufsnachricht (TB_WiderrufsNachricht) zu dem zugelassenen Client und Eintreten in einen unterbrechenden Gesprächsburstanforderungs-Hängezustand (TB-Anforderungs-Hängezustand);
Senden durch den PoC-Server in dem unterbrechenden TB-Anforderungs-Hängezustand einer TB_angenommen-Nachricht zu dem zugelassenen Client; und
Empfangen durch den zugelassenen Client der TB_angenommen-Nachricht und Freigeben des TB.

4. Verfahren nach Anspruch 3, wobei das Gewähren des TB für den Client mit der unterbrechenden Priorität Folgendes umfasst:
Senden einer Gesprächsburst-gewährt-Nachricht (TB_gewährt-Nachricht) zu dem Client mit der unterbrechenden Priorität; und
Empfangen durch den Client mit der unterbrechenden Priorität der TB_gewährt-Nachricht und Erfassen des TB.

5. Verfahren nach Anspruch 4, wobei nach dem Gewähren des TB für den Client mit der unterbrechenden Priorität das Verfahren ferner Folgendes umfasst:
Eintreten durch den PoC-Server in den TB_angenommen-Zustand aus dem unterbrechenden TB-Anforderungs-Hängezustand, um einen Dienst für den Client mit der unterbrechenden Priorität bereitzustellen.

6. Zellulärer Push-to-Talk-over-cellular-Server, PoC-Server, der Folgendes umfasst:
ein Medienverarbeitungsmodul, das dafür ausgelegt ist, eine von einem einen TB anfordernden Client gesendete TB-Anforderungsnachricht zu empfangen und die TB-Anforderungsnachricht zu einem TB_angenommen-Verarbeitungsmodul zu senden;
wobei das TB-angenommen-Verarbeitungsmodul dafür ausgelegt ist, die TB-Anforderungsnachricht von dem Medienverarbeitungsmodul zu empfangen; wenn bestimmt wird, dass der einen TB anfordernde Client ein Client mit der unterbrechenden Priorität ist und ein Gesprächsburst-Prioritätsniveau des einen TB anfordernden Clients höher ist als jenes des zugelassenen Clients, widerrufen des von dem zugelassenen Client angenommenen TB;
ein Modul zum Verarbeiten des unterbrechenden Hängens einer TB_Anforderung, das dafür ausgelegt ist, den TB für den Client mit der unterbrechenden Priorität zu gewähren,
nachdem das TB_angenommen-Verarbeitungsmodul den von dem zugelassenen Client angenommenen TB widerrufen hat;
einen Zeitgeber, der dafür ausgelegt ist, eine Zeitplanung auszuführen und eine Zeitablaufnachricht zu einem TB-gewährt-Nachricht-Erzeugungsmodul zu senden; und
das TB_gewährt-Nachricht-Erzeugungsmodul, das dafür ausgelegt ist, den TB für den Client mit der unterbrechenden Priorität zu gewähren, wenn es die Zeitablaufnachricht empfängt.

## Revendications

1. Procédé de cession à un client d'une salve de signaux vocaux, TB, **caractérisé en ce qu'**il comprend :
la réception (401-403, 501-502, 601-603) par un serveur d'alternat sur réseau cellulaire, PoC, le serveur PoC étant dans un état TB_Prise, d'un message de requête de TB envoyé par un client de requête de TB ; et
la résiliation, (404-405, 503-504, 604-605) par le serveur PoC, d'une TB prise par un client autorisé et la cession (606) de la TB au client à la priorité préemptive, quand il est déterminé que le client de requête de TB est un client à la priorité préemptive, et qu'un niveau de priorité de Salve de Signaux Vocaux du client de requête de TB est supérieur à celui du client autorisé ;
dans lequel la résiliation, par le serveur PoC, de la TB prise par le client autorisé comprend :
le lancement d'une temporisation, et la résiliation (503, 604-605), par le serveur PoC, de la TB prise par le client autorisé quand la temporisation expire.

2. Procédé selon la revendication 1, dans lequel la détermination que le client de requête de TB est un client à la priorité préemptive comprend :
la détermination que le client de requête de TB est un client à la priorité préemptive quand un niveau de priorité de Salve de Signaux Vocaux préemptive est inclus dans le message de requête de TB.

3. Procédé selon la revendication 1, dans lequel la résiliation, par le serveur PoC, de la TB prise par le client autorisé comprend :
l'envoi, par le serveur PoC, d'un message de Résiliation de Salve de Signaux Vocaux, (TB_Résiliée) au client autorisé, et le passage sur un état temporaire préemptif de Requête de Salve de Signaux Vocaux (Requête_TB) ;
l'envoi, par le serveur PoC dans l'état temporaire préemptif Requête_TB, d'un message TB_Prise au client autorisé ; et
la réception, par le client autorisé, du message TB_Prise et la libération de la TB.

4. Procédé selon la revendication 3, dans lequel la cession de la TB au client à la priorité préemptive comprend :
l'envoi d'un message de Salve de Signaux Vocaux Cédée (TB_Cédée) au client à la priorité préemptive ; et
la réception, par le client à la priorité préemptive, du message TB_Cédée et l'acquisition de la TB.

5. Procédé selon la revendication 4, comprenant en outre après la cession de la TB au client à la priorité préemptive :
le passage, par le serveur PoC, de l'état temporaire préemptif Requête_TB à l'état TB_Prise de manière à fournir un service au client à la priorité préemptive.

6. Serveur d'alternat sur réseau cellulaire, PoC, comprenant :
un module de traitement multimédia, adapté pour recevoir un message de requête de TB envoyé par un client de requête de TB et envoyer le message de requête de TB à un module de traitement TB_Prise ;
le module de traitement TB_Prise, adapté pour recevoir le message de requête de TB depuis le module de traitement multimédia ; quand il est déterminé que le client de requête de TB est un client à la priorité préemptive, et qu'un niveau de priorité de Salve de Signaux Vocaux du client de requête de TB est supérieur à celui du client autorisé,
pour résilier la TB prise par le client autorisé ;
un module de traitement temporaire préemptif de la Requête_TB, adapté pour céder la TB au client à la priorité préemptive après que le module de traitement TB_Prise résilie la TB prise par le client autorisé ;
une temporisation, adaptée pour effectuer un minutage, et envoyer un message de dépassement de temps à un module de génération de message TB_Cédée ; et
le module de génération de message TB_Cédée, adapté pour céder la TB au client à la priorité préemptive à la réception du message de dépassement de temps.
